# EUROPEAN PATENT SPECIFICATION

(11) **EP 1 106 405 B1**
(45) Date of publication and mention of the grant of the patent: **12.10.2005**
(21) Application number: 00126290.6
(22) Date of filing: 01.12.2000
(51) Int. Cl.: B60H 1/00

(54) **Supply assembly for feeding air into the passenger compartment of a vehicle**
Versorgungseinrichtung zur Luftzuführung eines Fahrzeuginnenraumes
Assemblage d'alimentation d'air dans l'habitacle d'un véhicule

(30) Priority: 03.12.1999 IT TO991069
(43) Date of publication of application: 13.06.2001
(73) Proprietor: FIAT AUTO S.p.A., 10135 Torino (IT)
(72) Inventor: Malara, Nicola, 20095 Cusano Milanino (IT); Rota, Maurizio, 20090 Trezzano Sul Naviglio (IT)
(74) Representative: Eccetto, Mauro

(56) References cited:
- EP-A- 0 051 307
- EP-A- 0 495 201
- DE-A- 2 909 628
- US-A- 4 523 715
- US-A- 5 813 600
- PATENT ABSTRACTS OF JAPAN vol. 010, no. 191 (M-495), 4 July 1986 (1986-07-04) & JP 61 036014 A (SUZUKI MOTOR CO LTD), 20 February 1986 (1986-02-20)

## Description

The present invention relates to a supply assembly for feeding air into the passenger compartment of a vehicle.

Vehicles are normally equipped with a supply assembly for feeding air into and enhancing the comfort of the passenger compartment, and which comprises a number of outlets and an electric fan connected to the outlets by air feed lines. More specifically, at least some of the outlets are fitted with an on-off air control member which is movable between a fully-open and a closed outlet position to enable the user to regulate air flow or air flow distribution as required by adjusting the position of the on-off member.

Though widely used, passenger compartment air supply assemblies of the above sort are far from satisfactory. That is, when the on-off member settings of the various outlets, and hence distribution of the various air streams, are adjusted by the user, the amount of air fed into the passenger compartment necessarily varies, thus bringing about an often undesired change in the temperature of the passenger compartment. An undesired increase, in particular, in the amount of air fed into the passenger compartment when the outlets are adjusted results in considerable energy waste, the user's intention in fact being to adjust the distribution of the air streams as opposed to increasing the total amount of air fed into the passenger compartment.

US 5,813,600 discloses a method for operating a heating or air conditioning system. The system comprises a blower for supply an air flow, a number of air outlets having respective on-off members, and means to automatically adjust both the blower speed and the on-off member as a function of an outlet temperature. The method above has the drawback that it does not guaranted the maintaining of a constant air flow into the passenger compartment.

It is an object of the present invention to provide a supply assembly for feeding air into the passenger compartment of a vehicle, designed to provide a straightforward, low-cost solution to the above problems.

According to the present invention, there is provided a supply assembly for feeding air into a passenger compartment of a vehicle as it is claimed in claim 1.

A non-limiting embodiment of the present invention will be described by way of example with reference to the accompanying drawings, in which:
Figure 1 shows, schematically, a preferred embodiment of the air supply assembly according to the invention;
Figure 2 shows a larger-scale view of a detail in Figure 1;
Figure 3 shows the same view as in Figure 2 with one variation;
Figure 4 shows the same view as in Figures 2 and 3 with one variation;
Figure 5 shows a graph of the operating principle of the Figure 1 assembly on which the invention is based.

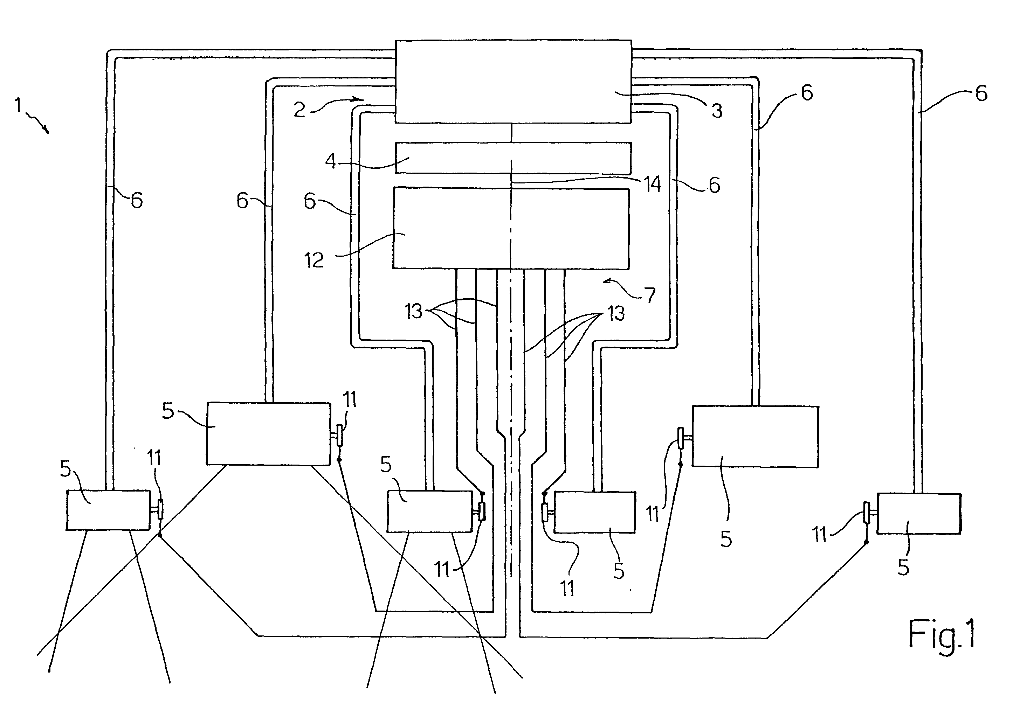

Number 1 in Figure 1 indicates a supply assembly for feeding air into a passenger compartment of a vehicle (not shown). Assembly 1 substantially comprises an electric fan 2 in turn having an impeller 3 and a motor 4 for transmitting motion to impeller 3; a number of air outlets 5 for feeding an adjustable air flow into the passenger compartment, and each communicating with impeller 3 by means of a respective air conduit 6; and a control assembly 7 for adjusting the number of revolutions of impeller 3 as a function of the adjustment of the air flow from outlets 5.

Each outlet 5 has an opening 8 and comprises an on-off member 9 housed in opening 8 and hinged to outlet 5 to rotate about an axis A into a position fully opening and a position closing opening 8, so as to define, with opening 8, an air passage 10, the dimensions of which are adjustable as required by the user moving on-off member 9.

Control assembly 7 comprises, for each outlet, a position detecting device 11 for detecting the position of on-off member 9; and a central control unit 12 common to all of devices 11 and connected electrically to position detecting devices 11 by respective electric connections 13, and to motor 4 of electric fan 2 by further electric connections 14.

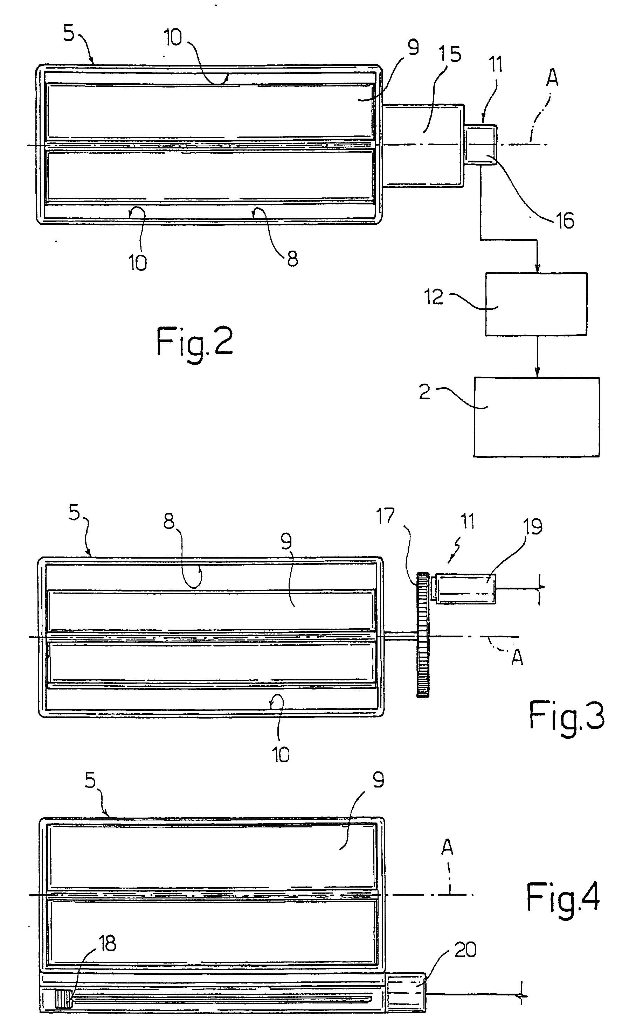

Figure 2 shows an outlet 5 in which on-off member 9 is rotated about axis A by an electric motor 15, and rotation with respect to a reference position, e.g. a fully-open position, is detected by a position detecting device 11, which, in the example shown, is defined by a position transducer 16 for detecting the angular position of on-off member 9.

Figures 3 and 4 show two outlets 5, which only differ from the Figure 2 outlet 5 by on-off member 9 being moved mechanically by a wheel 17 (Figure 3) or by a lever 18 (Figure 4). The movement of wheel 17 and lever 18 is detected by an angular position transducer 19 and a linear position transducer 20 respectively.

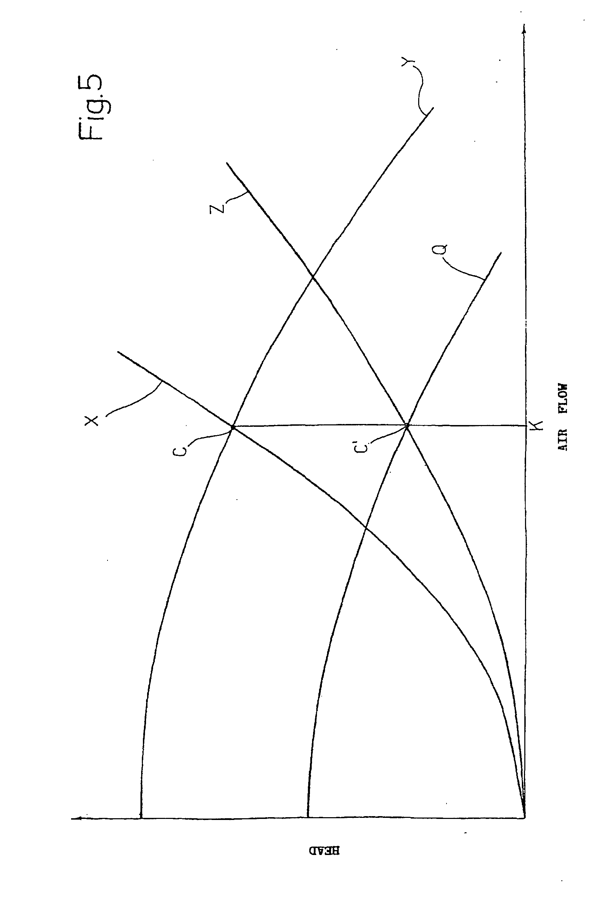

In central control unit 12 are memorized in known manner a number of permeability characteristics of the outlets and electric fan 2 alongside variations in the air flow into the passenger compartment. More specifically, in Figure 5, curves Q and Y are the characteristic curves of electric fan 2 at two different rotation speeds, and curves X and Z are two permeability curves of outlets 5 in two different open conditions of outlets 5.

Operation will now be described assuming as a starting point the reference condition indicated in Figure 5 by point C at the intersection of characteristic curve Y of electric fan 2 and characteristic curve X of the total permeability of outlets 5, and which corresponds to an air flow K from outlets 5 into the passenger compartment of the vehicle.

When the user adjusts the position of one or more on-off members 9, the permeability through outlets 5 varies and the adjustment is signaled to the central control unit, which determines the new permeability curve, e.g. curve Z, and at the same time the new characteristic curve of the fan - in this case, curve Q - corresponding to a different speed of the motor but to the same air flow into the passenger compartment of the vehicle, e.g. point C'. Central control unit 12 then acts on motor 4 of electric fan 2 to set the electric fan to the conditions indicated by the characteristic curve Q determined previously.

The supply assembly for feeding air into a vehicle passenger compartment according to the present invention therefore provides for adjusting the individual outlet settings while maintaining the set temperature conditions, and so enabling considerable energy saving by automatically reducing the speed of electric fan 2. Using the supply assembly according to the invention, in fact, it is possible, when the total permeability of outlets 5 is reduced, to reduce the speed of the electric fan while maintaining constant air flow into the passenger compartment of the vehicle.

Finally, the possibility of adjusting the speed of the electric fan for a given air flow provides for greatly reducing the noise generated by the fan as a result of inevitable turbulence.

Clearly, changes may be made to the air supply assembly as described herein without, however, departing from the scope of the accompanying Claims.

For example, the position detecting devices, the outlets and the relative on-off members may differ from those described.

## Claims

1. A supply assembly (1) for feeding air into a passenger compartment of a vehicle maintaining the air flow into the passenger compartment substantially constant, the assembly (1) comprising an electric fan (2) for supplying an air flow; number of air outlets (5) having respective adjustable on-off members (9) set to a reference position corresponding to a given air flow (C) into the passenger compartment; detecting means (11) for detecting the position of said on-off members (9) and emitting a relative positioning signal; and a central control unit (12) connected to a motor (4) of said electric fan (2) for adjusting the flow supplied by the electric fan (2) as a function of the signals received from said detecting means (11); said supply assembly being **characterized in that** in said central control unit (12) are memorised both characteristic curves of electric fan (2) at different rotation speed and permeability curves of outlets in different open conditions.

2. An assembly as claimed in Claim 1, **characterized in that** said detecting means (11) comprise a position transducer (16; 19; 20) connected to said central control unit (12).

3. An assembly as claimed in Claim 2, **characterized in that** said transducer is an angular transducer (16; 19).

4. An assembly as claimed in Claim 2, **characterized in that** said transducer is a linear transducer (20).

## Patentansprüche

1. Versorgungseinrichtung (1) zur Luftzuführung in einen Fahrzeuginnenraum unter Beibehaltung eines im wesentlichen konstanten Luftstromes in den Innenraum, wobei die Einrichtung (1) ein elektrisches Gebläse (2) zum Zuführen eines Luftstroms, eine Anzahl von Luftauslässen (5) mit entsprechenden justierbaren auf eine Referenzposition entsprechend einem gegebenen Luftstrom (C) in den Innenraum gesetzte An/Aus-Elemente (9), Meßmittel (11) zum Erfassen der Position der An/Aus-Elemente (9) und Aussenden eines relativen Positionierungssignals und eine mit einem Motor (4) des elektrischen Gebläses (2) verbundene Zentralsteuereinheit (12) zum Justieren des durch das elektrische Gebläse (2) zugeführten Stroms als Funktion des von den Meßmitteln (11) empfangenen Signals umfaßt, wobei die Versorgungseinrichtung **dadurch gekennzeichnet ist, daß** in der Zentralsteuereinheit (12) sowohl charakteristische Kurven vom elektrischen Gebläse (2) bei verschiedenen Rotationsgeschwindigkeiten als auch Permeabilitätskurven von den Ausgängen bei verschiedenen Öffnungszuständen gespeichert sind.

2. Einrichtung nach Anspruch 1, **dadurch gekennzeichnet, daß** die Meßmittel (11) einen mit der Zentralsteuereinheit (12) verbundenen Positionsmeßwandler (16; 19; 20) umfassen.

3. Einrichtung nach Anspruch 2, **dadurch gekennzeichnet, daß** der Meßwandler ein Winkelmeßwandler (16; 19) ist.

4. Einrichtung nach Anspruch 2, **dadurch gekennzeichnet, daß** der Meßwandler ein linearer Meßwandler (20) ist.

## Revendications

1. Ensemble d'alimentation (1) pour amener de l'air dans un compartiment de passagers d'un véhicule, maintenant l'écoulement d'air dans le compartiment de passagers sensiblement constant, l'ensemble (1) comprenant un ventilateur électrique (2) pour amener un écoulement d'air, plusieurs sorties d'air (5) ayant des éléments (9) de marche-arrêt réglables respectivement, réglés à une position de référence correspondant à un écoulement d'air donné (C) dans le compartiment de passagers, des moyens de détection (11) pour détecter la position desdits éléments de marche-arrêt (9) et émettre un signal de positionnement relatif et une unité de commande centrale (12) reliée à un moteur (4) dudit ventilateur électrique (2) pour régler l'écoulement fourni par le ventilateur électrique (2) en fonction des signaux reçus à partir desdits moyens de détection (11), ledit ensemble d'alimentation étant **caractérisé en ce que** dans ladite unité de commande centrale (12) sont mémorisées tant les courbes caractéristiques du ventilateur électrique (2) à différentes vitesses de rotation que les courbes de perméabilité des sorties dans différentes conditions ouvertes.

2. Ensemble selon la revendication 1, **caractérisé en ce que** lesdits moyens de détection (11) comportent un transducteur de position (16, 19, 20) relié à ladite unité de commande centrale (12).

3. Ensemble selon la revendication 2, **caractérisé en ce que** ledit transducteur est un transducteur angulaire (16, 19).

4. Ensemble selon la revendication 2, **caractérisé en ce que** ledit transducteur est un transducteur linéaire (20).
